(19) Europäisches Patentamt
European Patent Office
Office européen des brevets

(11) **EP 3 674 752 B1**

(12) **EUROPEAN PATENT SPECIFICATION**

(45) Date of publication and mention
of the grant of the patent:
**26.10.2022 Bulletin 2022/43**

(21) Application number: **19218667.4**

(22) Date of filing: **20.12.2019**

(51) International Patent Classification (IPC):
**G01T 1/24** *(2006.01)*

(52) Cooperative Patent Classification (CPC):
**G01T 1/242**

(54) **DETECTOR SYSTEM AND RADIATION IMAGING DEVICE**

DETEKTORSYSTEM UND STRAHLUNGSBILDGEBUNGSVORRICHTUNG

SYSTÈME DE DÉTECTEUR ET DISPOSITIF D'IMAGERIE PAR RAYONNEMENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2018 CN 201811580796**

(43) Date of publication of application:
**01.07.2020 Bulletin 2020/27**

(73) Proprietors:
• **Nuctech Company Limited
TongFang Building,
Shuangqinglu,
Haidian District
Beijing 100084 (CN)**
• **Tsinghua University
Haidian District,
Beijing 100084 (CN)**

(72) Inventors:
• **TIAN, Yang
Beijing, Beijing 100084 (CN)**
• **LI, Yulan
Beijing, Beijing 100084 (CN)**

(74) Representative: **Held, Stephan
Meissner Bolte Patentanwälte
Rechtsanwälte Partnerschaft mbB
Widenmayerstraße 47
80538 München (DE)**

(56) References cited:
EP-A1- 3 282 288      WO-A1-2013/063133
JP-A- 2008 232 971    US-A1- 2016 135 764

## Description

### Field of the Invention

The present invention relates to the field of radiation detection technology, in particular to a detector system and a radiation imaging device.

### Background of the Invention

In the field of radiation detection, the Compton imaging method is an effective way to determine the location and spatial distribution of gamma radionuclides. Compton camera is a radiation imaging device adopting the Compton imaging method.

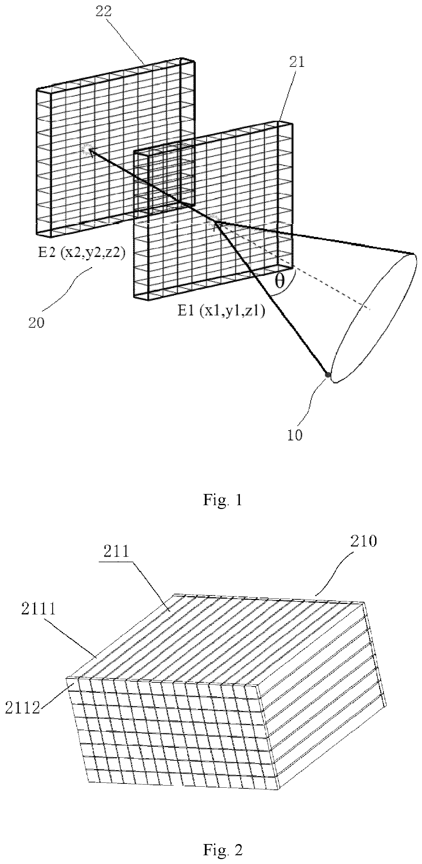

As shown in Figure 1, a detector 20 of a basic Compton camera consists of two detector layers, including a first detector layer 21 working as scattering detector and a second detector layer 22 working as absorbing detector. Each detector layer is divided into a plurality of voxels which constitute a detector array that can obtain position, energy and time information.

Gamma rays from a radioactive source 10 undergo Compton scattering in the scattering detector, where the deposited energy is E1 and the scattering position is (x1, y1, z1), and scattered photons undergo photoelectric reaction in the absorbing detector and then be absorbed completely by the absorbing detector, where the deposited energy is E2 and the scattering position is (x2, y2, z2).

According to Compton imaging principle, where the gamma rays are emitted can be determined at a certain point on the surface of a cone, of which the vertex is (x1, y1, z1) and the axis is a line connecting between position (x1, y1, z1) and position (x2, y2, z2). The cone angle can be obtained from equation (1):

$$\cos\theta = 1 - m_e c^2 \left( \frac{1}{E_2} - \frac{1}{E_1 + E_2} \right)$$

$$(1)$$

Here, $M_e c^2$ is the static energy of electrons.

When the radioactive source is single-point or multiple-point source, through multiple examples, many cones can be obtained. The intersection of these cones is theoretically the location of the radioactive source.

Compton cameras require trade-offs between three key indicators: angular resolution, detection efficiency, and imaging field of view. The distance between the scattering detector and the absorbing detector needs to be increased to improve the angular resolution, which inevitably leads to the decrease of the detection efficiency and the imaging field of view. The angular resolution may get worse (generally only 20 to 30 degrees.) if a 3D position sensitive detector is used as both scatterer and absorber to improve the detection efficiency and acquire the omnidirectional detection capability, due to the reduced distance between the scattering point and the absorption point.

JP2008232971A provides a nuclear medicine diagnostic apparatus capable of detecting gamma rays having a wide range of energy.

EP3282288A1 provides a radiation measuring apparatus comprising multiple detector modules and a calculation device.

US20160135764A1 provides a digital radiographic detector having a radiolucent cover and housing at one or more edges of the detector allows radiographic imaging using multiple detector arrangements with overlapping edges.

WO2013063133A1 describes various embodiments of positron emission tomography (PET) systems for use with mammography machines and associated devices and methods.

### Summary of the Invention

The purpose of the present invention is to provide a detector system according to claim 1 and a radiation imaging device according to claim 13.

A first aspect of the present invention provides a detector system comprising:

a detector, comprising a plurality of detector layers that are overlapped, wherein the detector layer comprises a detector element layer and at least one of the detector layers is movable along the thickness direction of the detector layers; and
a distance adjusting device which is drivingly connected with at least one of the detector layers, so as to adjust the inter-layer distance between adjacent detector layers of the detector by moving at least one of the detector layers along the thickness of the detector layers wherein

the distance adjusting device comprises an inter-layer connecting mechanism connected with each detector layer, and the inter-layer connecting mechanism defines the same inter-layer distances between each two adjacent detector layers when the distance adjusting device adjusts the inter-layer distance. and

the inter-layer connecting mechanism comprises a rod telescopic structure formed by a plurality of hinged connecting rods, and each detector layer is hinged with the rod telescopic structure.

Further, the detector element layer comprises a scintillator detecting element layer, and the detector layer comprises a photoelectric conversion element connected with the scintillator detecting element layer and an integrated circuit chip connected with the photoelectric conversion element.

Further, the detector comprises three or more than three detector layers.

Further, the detector element layer comprises a scintillator detecting element layer, and the scintillator detecting element layer comprises a plurality of scintillator bars arranged closely side by side in a direction perpendicular to the thickness of the detector layers.

Further, sides other than the both ends in the length direction of the scintillator bars are provided with reflective layers.

Further, sides other than the both ends in the length direction of the scintillator bars are provided with light shield layers.

Further, the detector layer comprises silicon photomultipliers, and both ends of each scintillator bar are respectively provided with one silicon photomultiplier.

Further, the detector layer further comprises an integrated circuit chip connected with the silicon photomultiplier of the detector layer in which the integrated circuit chip is located.

Further, the detector system comprises a power supply device and a data acquisition device which are connected with the detector.

Further, the distance adjusting device comprises a guiding mechanism for guiding the movement of at least one of the detector layers.

Further, the distance adjusting device further comprises a driving mechanism which is drivingly connected with at least one detector layer of the plurality of detector layers, using to move at least one of the detector layers along the thickness direction of the detector layers to adjust the inter-layer distance.

Further, the detector system comprises a detector bracket, and he plurality of detector layers and the distance adjusting device are arranged on the detector bracket.

The present invention provides a radiation imaging device comprising a detector system described of the first aspect of the present invention.

Based on the detector system provided in the present invention, the inter-layer distance between adjacent detector layers of the detector can be adjusted, and the detection efficiency reaches the top when the inter-layer distance is the minimum. When the inter-layer distance is the maximum, the detection efficiency is the lowest and the field of view is the smallest, but the angular resolution is the best. When the inter-layer distance is between the maximum and the minimum, the detection efficiency, the imaging field of vision and the angular resolution can be adjusted according to the inter-layer distance, which is conducive to meeting different requirements of radiation measurement, and thus conducive to achieving an omnidirectional and efficient detection effect with high angular resolution.

The present invention also provides a radiation imaging device comprising the detector system of the present invention.

The radiation imaging device has the same advantages as the detector system disclosed herein.

Other features and advantages of the features of the present invention can be understood more clearly from the following detailed description of exemplary embodiments of the invention with reference to the accompanying drawings.

**Brief Description of the Drawings**

The accompanying drawings, which constitute part of this application, are intended to provide a further understanding of the present invention. The exemplary embodiments of the invention and description thereof serve to explain the present disclosure, but do not constitute improper restrictions on the present disclosure. In the drawings:

Figure 1 is a schematic diagram of the working principle of a Compton camera detector in the prior art.
Figure 2 is a structure diagram of a detector of a detector system illustrated in an embodiment of the present invention when the inter-layer distance between adjacent detector layers is the minimum.
Figure 3 is a structure diagram of the detector in the embodiment illustrated in Figure 2 when the inter-layer distance between adjacent detector layers is the maximum.

Figure 4 is a structure diagram of the detector in the embodiment illustrated in Figure 2 at a certain position when the inter-layer distance between adjacent detector layers is between the minimum and the maximum.

Figure 5 is a structure diagram of one detector layer of the detector in the embodiment shown in Figure 2.

Figure 6 is a working principle diagram of the detector in the embodiment shown in Figure 2.

Figures 7 and 8 are radioactive source imaging effect views of the detector in the embodiment shown in Figure 2.

Figure 9 is a structure diagram of a detector system illustrated in another embodiment of the present invention when the inter-layer distance between adjacent detector layers of a detector is the minimum.

Figure 10 is a structure diagram of the detector system in the embodiment illustrated in in Figure 9 when the inter-layer distance between adjacent detector layers of the detector is the maximum.

Figure 11 is a structure diagram of the detector system in the embodiment illustrated in Figure 9 when the inter-layer distance between adjacent detector layers of the detector is between the minimum and the maximum.

## Detailed Description of the Preferred Embodiments

Together with the drawings in the embodiments of the present disclosure, the following text will describe clearly and completely the technical solution implemented in the embodiments of the present invention.

Obviously, the embodiments described are merely part of embodiments implemented in the present invention, not all embodiments. The following description of at least one exemplary embodiment is in fact illustrative only and is in no way intended to limit the present invention and its application or usage.

Relative arrangement of components and steps, numerical expressions, and numerical values set forth in these embodiments, unless specifically stated otherwise, should not be explained as a limitation on the present invention . Meanwhile, it should be understood that the dimensions of the various parts shown in the accompanying drawings are for descriptive purposes and are not necessarily drawn according to the actual scale. Techniques, methods, and apparatus known to those of ordinary skill in the relevant art may not be discussed in detail, but where appropriate, these techniques, methods, and apparatuses should be considered as part of this specification. In all the embodiments shown and discussed here, any specific value should be interpreted as merely exemplary and not as limitative. Therefore, other examples of the exemplary embodiments may have different values. It should be noted that similar labels and letters represent similar items in the accompanying drawings below, and therefore, any item already defined in one accompanying drawing does not need to be further discussed in subsequent accompanying drawings.

The use of the terms "first", "second" and similar words when describing the present invention are merely used to distinguish between different parts and have no special meaning unless otherwise stated, therefore cannot be construed as limitation on the scope of protection in the present invention.

It should be noted that nouns of locality used to describe the present invention, such as "front, rear, top, bottom, left and right", "transverse, vertical, perpendicular and horizontal" and "top and bottom", usually indicate the orientation or positional relationship shown in the accompanying drawings for the convenience of describing the present invention and simplifying the description only and, in the absence of a statement to the contrary, do not indicate or imply that the device or element in question must have a particular orientation or be constructed and operated in a particular orientation, and therefore cannot be understood as a limitation on the scope of protection of the present invention. Terms "inside" and "outside" refer to the inside and outside of the outline of each component.

In the present invention, "a plurality of" means two, three or more than three, for example, "a plurality of layers" means two layers, three layers or more than three layers.

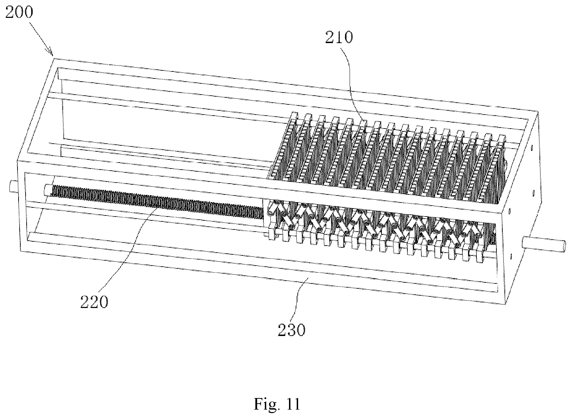

As shown in Figures 2 to 5 and Figures 9 to 11, the detector system 200 provided in the embodiments of the present invention mainly comprises detector 210 and a distance adjustment device 220. The detector 210 comprises a plurality of detector layers 211 that are overlapped along the thickness direction of the detector layers 211; at least one of the detector layers 211 in the plurality of detector layers 211 are movable along the thickness direction of the detector layers 211. The detector layer 211 comprises a detector element layer. The distance adjusting device 220 is drivingly connected with the at least one of the detector layers 211 to adjust the inter-layer distance between adjacent detector layers 211 of the detector 210 by moving the at least one of the detector layers 211 along the thickness of the detector layers 211. The inter-layer distance described in the present disclosure is the distance between opposite surfaces of the adj acent detector layers 211.

In the detector system 200 provided in embodiments of the present invention the inter-layer distance between adjacent detector layers 211 can be adjusted. The detection efficiency reaches the top when the inter-layer distance is the minimum. When the inter-layer distance is the maximum, the detection efficiency is the lowest and the field of view is the smallest, but the angular resolution is the best. When the inter-layer distance is between the maximum and the minimum, the detection efficiency, the imaging field of vision and the angular resolution can be adjusted according to the inter-layer distance, which is conducive to meeting different requirements of radiation measurement, and thus conducive to achieving an omnidirectional and efficient detection effect with high angular resolution.

The detector element layer could be, for example, a scintillator detecting element layer, a semiconductor detecting element layer or a gas detecting element layer, or the like. The scintillator detecting element, for example, could be a GAGG scintillator element, a LSO scintillator element, a NaI scintillator element, a CsI scintillator element or a LaBr$_3$ scintillator element. The semiconductor detector element could be a high-pure germanium detector element, a CdZnTe detector element, etc.

In some embodiments, the detector element layer comprises a scintillator detecting element layer, and each detector layer 211 comprises a photoelectric conversion element connected with the scintillator detecting element layer and an integrated circuit chip connected with the photoelectric conversion element.

The photoelectric conversion element, for example, could be a photomultiplier tube (PMT), a photo-diode (PD), an avalanche photodiode (APD) or a silicon photomultiplier (SiPM or multi-pixel photon counter (MPPC)). The photoelectric conversion element is adapted to convert optical signals obtained by the scintillator detecting element layer into electrical signals.

The photoelectric conversion element is not needed if the detector element layer is a semiconductor detecting element layer or a gas detecting element layer.

In some embodiments, the detector 210 may comprise three or more detector layers 211, such as three, four, six, seven, nine, ten, fourteen or more layers, but eight or more layers are preferable. Of course, the detector 210 may also comprise only two detector layers 211.

In some embodiments, the detector element layer of the detector layers 211 comprises a scintillator detecting element layer. The scintillator detecting element layer comprises a plurality of scintillator bars 2111 arranged closely side by side in a direction perpendicular to the thickness of the detector layers 211. In this case, the detector layers 211 may comprise silicon photomultipliers 2112, and both ends of each scintillator bar 2111 are respectively provided with one silicon photomultiplier 2112. The detector layers 211 may further comprise an integrated circuit chip which is connected with the silicon photomultiplier 2112 of the detector layer 211 in which the integrated circuit chip is located.

In some embodiments, a reflective layer is provided on each scintillator bar 2111, specifically on the sides parallel to the thickness direction of the detector layers 211. The reflective layer is used to isolate the scintillant light produced by each scintillator bar 2111, which is advantageous for preventing interference between different scintillator bars 2111.

In some embodiments, a light shield layer is provided for each scintillator bar 2111, specifically on the sides parallel to the thickness direction of the detector layers 211, which prevents the interference generated by lights other than detection rays.

In some embodiments, the detector system 200 comprises a power supply device and a data acquisition device which are connected with the detector 210.

According to the invention, the distance adjusting device 220 comprises an inter-layer connecting mechanism 221 which is connected with each detector layer 211, and the inter-layer connecting mechanism 221 defines the same inter-layer distances between each two adjacent detector layers 211 when the distance adjusting device 220 adjusts the inter-layer distance.

According to the invention, inter-layer connecting mechanism 221 comprises a rod telescopic structure formed by a plurality of hinged connecting rods, and each detector layer 211 is hinged with the rod telescopic structure. In some embodiments, the rod telescopic structure consists of a plurality of connecting rods which are hinged sequentially from end to end or in some other embodiments the rod telescopic structure may also comprise a plurality of shear fork structures connected successively.

In some embodiments, the distance adjusting device 220 comprises a guiding mechanism 222 for guiding the movement of each detector layer 211. The guiding mechanism 222, for example, may comprise guiding rods, and each detector layer 211 may comprise guiding holes matching the guiding rods. The guiding mechanism 222 may also comprise a guiding rail and a mating part movably fitted along the guiding rail, and each detector layer 211 is provided with a mating part.

In some embodiments, the distance adjusting device 220 further comprises a driving mechanism 223 which is drivingly connected with at least one detector layer 211 in the plurality of detector layers 211 and is configured to move of the at least one of the detector layers 211 along the thickness direction of the detector layers 211, so as to adjust the inter-layer distance. The driving mechanism 223 may comprise a screw rod and a nut which is matched with the screw rod and is fixedly connected with one of the detector layers 211. The screw rod can be driven manually or by a power source, such as a step motor, which drives the screw rod to act.

In some embodiments, the detector system 200 comprises a detector bracket 230, the plurality of detector layers 210 and a distance adjusting device 220 arranged on the detector bracket 230. The detector bracket 230 is preferably to have a frame structure.

The detector system 200 in some embodiments of the present invention will be described in detail below in conjunction with Figures 2 to 11.

Figures 2 to 8 illustrate the structure, principle and effect of the detector 210 of the detector system 200 in accordance with an embodiment of the present invention.

The detector system 200 mainly comprises detector 210, a distance adjusting device, a detector bracket, a power supply device, and a data acquisition device.

As shown by Figures 2-5, the detector 210 includes eight detector layers 211 overlapped along the thickness direction of detector layers 211. The thickness direction of the detector layers 211 is the up and down direction like in Figures 2-5. Seven of the eight detector layers 211, except the bottom detector layer 211, are movable along the thickness direction of the detector layers 211.

The distance adjusting device is drivingly connected with at least one of the detector layers 211 of the plurality of detector layers 211, so as to adjust the inter-layer distance between adjacent detector layers 211 by moving at least one of the detector layers 211 along the thickness of the detector layers 211. The present embodiment focuses on the structure, function, principle and effect of the detector 210. Therefore, Figures 2-4 only illustrate the adjustment results rather than the specific structure of the distance adjusting device 220. The present embodiment does not specify the structure of the distance adjusting device.

The detector element layer of the detector layer 211 comprises a scintillator detecting element layer, a silicon photomultiplier 2112 connected with the scintillator detecting element layer, and an integrated circuit chip connected with the silicon photomultiplier 2112.

As shown by Figures 2-5, the scintillator detecting element layer comprises 16 scintillator bars 2111 arranged closely side by side in a direction perpendicular to the thickness of the detector layers 211. The scintillator bars 2111 are GAGG scintillator bars and are 3 mm $\times$ 3 mm $\times$ 48 mm in size. The four sides of each scintillator bar 2111 are covered with a reflective layer and a light shield layer, except for the square faces at both ends. The plurality of GAGG scintillator bars on each scintillator detecting element layer are closely arranged so as to achieve a higher detection efficiency and a better consistency in the efficiency of all-direction detection when the distance between the centers of adjacent detector layers is equal to the thickness of the detector layers (the layers fit tightly).

In this case, the detector layer 211 comprises 32 silicon photomultipliers 2112, and both ends of each of the 16 scintillator bars 2111 are respectively provided with one said silicon photomultiplier 2112. The integrated circuit chip may be an ASIC (Application Specific Integrated Circuit) chip connected to the 32 silicon photomultipliers 2112 of the detector layer 211 in which the integrated circuit chip is located. In the present embodiment, cooperating with the end faces at both ends of the scintillator bars 2111, signals of both ends of the scintillator bars 2111 are read by a silicon photomultiplier 2112 having an effective area of 3 mm $\times$ 3 mm. Each of the scintillator bars 2111 and the two silicon photomultipliers 2112 at both ends thereof constitute a basic detecting unit.

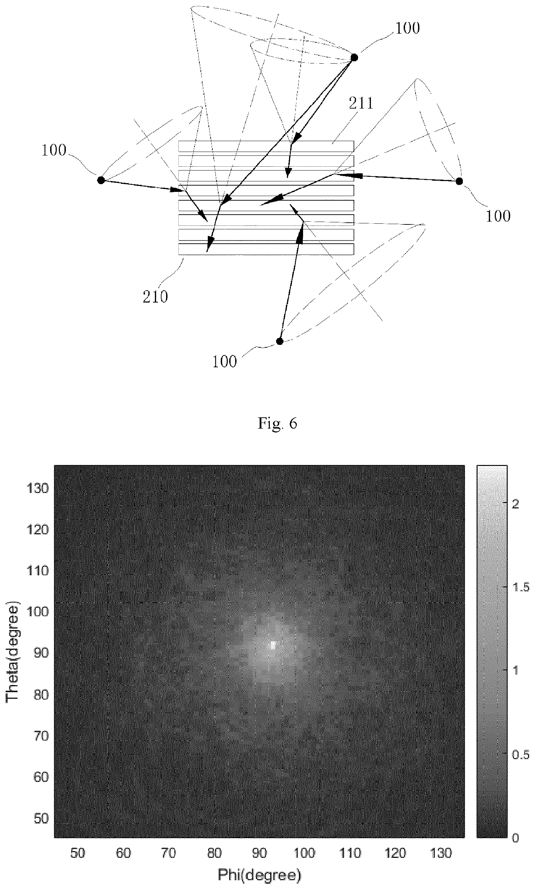

As shown in Figure 6, the detector 210 of the detector system 200 comprises eight detector layers 211 and detect rays from sources 100 at a plurality of locations. Each detector layer 211 is capable of obtaining the energy, time and two-dimensional position information of the detected cases. The detector layers 211 of the detector 210 on have the same function and each of the detector layers 211 may be either an absorbing detector or a scattering detector that determines relevant information for the detected cases using the coincidence method. The coincidence method is that a time window of a certain width is specified (for example, taking a typical value of 100 ns) and will be started when any one of the detector layers 211 is triggered; all the cases falling in the window are recorded uniformly; if exactly two detector layers of the detector detect an case, the detector are allowed for imaging and it can be determined which detector layer 211 acts as the absorbing detector and which detector layer 211 acts as the scattering detector.

Figure 2 is a schematic view showing the structure of the detector 210 when the detector layers 211 of the detector 210 in the present embodiment fit closely. In this case, the inter-layer distance reaches the minimum, zero to be specific, and the distance between the centers of adjacent detector layers 211 is equal to the thickness of the detector layers 211. The position of each scintillator bar 2111 in the array contains two-dimensional information. By means of the silicon photomultipliers 2112 at both ends of each scintillator bar 2111, the position of the action point of the radioactive source within each scintillator bar 2111 can be determined, and then the three-dimensional position information can be obtained. Moreover, the detector layers 211 may be read independently and subject to the coincidence method. In this case, the entire detector 210 are a 3D position sensitive detector 210 which allows omnidirectional detection with an angular resolution of about 40 degrees and is used for a fast (<1 s) determination of the species of the nuclide and the imaging region of interest, and the detector 210 are the most efficient. By the detector 210 of the present embodiment, the intrinsic detection efficiency for 662 keV gamma ray can reach 20%.

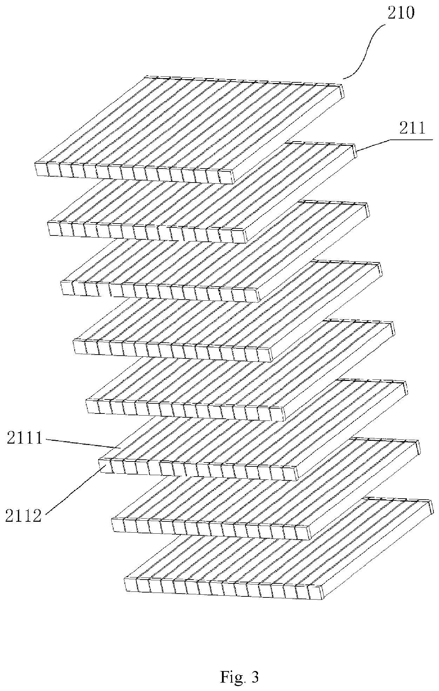

Figure 3 is a schematic view showing the structure of the detector 210 when the inter-layer distance between adjacent detector layers 211 of the detector 210 in the present embodiment reach the maximum (for example, the distance between the centers of adjacent detector layers is 5 times the thickness of the detector layers 211). In this case, the detector 210 provide high precision imaging over a range of 150 degree. The detection efficiency will drop as a result of the reduction in the solid angle of each detector layer 211 towards the remaining detector layers 211 caused by the widening of the inter-layer distance between adj acent detector layers 211; the field of view becomes smaller because it is impossible to effectively image side incidences after the distance between the layers gets enlarged; but the angular resolution gets better after the inter-layer distance is enlarged as the uncertainty in positioning action points has less influence on the determination of the direction of the line formed by the action points.

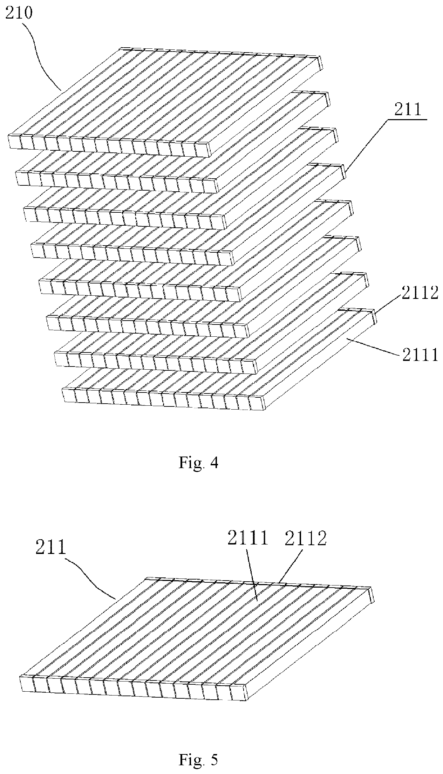

Figure 4 is a schematic view showing the structure of the detector 210 when the inter-layer distance between adjacent detector layers 211 of the detector 210 in the present embodiment is between the minimum and the maximum. When the inter-layer distance between adjacent detector layers 211 reaches the minimum, the action points are close to each other, so the uncertainty in positioning has a great influence on determining the direction of line formed by the action points, and the angular resolution is poor. After the layers are pulled further apart, the action points get far away from each other, so the angular resolution gets improved, but the efficiency drops and the field of view become small. The flexible adjustment of the inter-layer distance allows to cope with the requirements of the imaging field of view, the detection efficiency, the angular resolution, etc. in different scenarios.

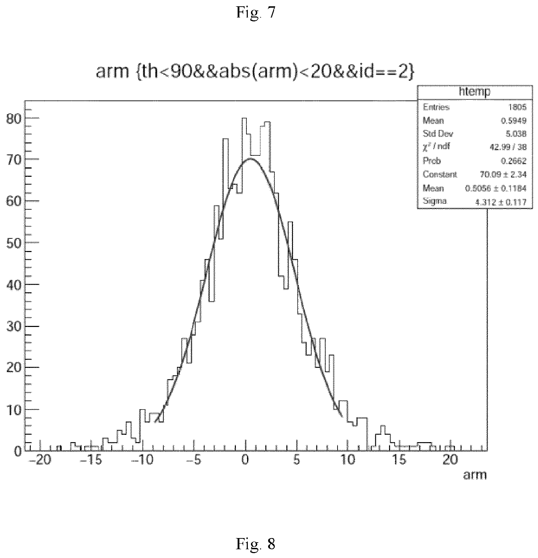

Figure 7 and Figure 8 respectively provide a view of the radiation source imaging effect realized by the detector 210 of the embodiments shown in Figures. 2 to 5 when the inter-layer distance between adjacent detector layers 211 is the maximum. Specifically, Figure 7 and Figure 8 are imaging effect view of $^{137}$Cs radiation source obtained by using the simple back projection method.

In Figure 7, the abscissa indicates azimuth angles, the ordinate indicates tilt angles, and the strip color band indicates the relative intensity of projections. The region with high intensity at the center of the image in Figure 7 is the reconstructed region where the ray intensity is high, corresponding to the position of the $^{137}$Cs radioactive source.

In Figure 8, the abscissa indicates the difference between the calculated back projection angle and angle of the real radioactive source; the ordinate indicates the number of cases per unit angle difference; the broken lines constitute a statistical bar chart; the smooth curve shows the results of Gaussian Fitting based on which the angular resolution, namely the full width at half maxima (FWHM) of Gaussian distribution obtained by fitting.

In the simulation calculation, the detector is provided with the 8 detector layers, and the detector layer is provided with 16 GAGG scintillator bars which are 3 mm $\times$ 3 mm $\times$ 48 mm in size. When the distance between the centers of adjacent detector layer is 15mm, a total of 1805 cases are counted, with the intrinsic detection efficiency reaching 1.8% and the angular resolution reaching 10 degrees.

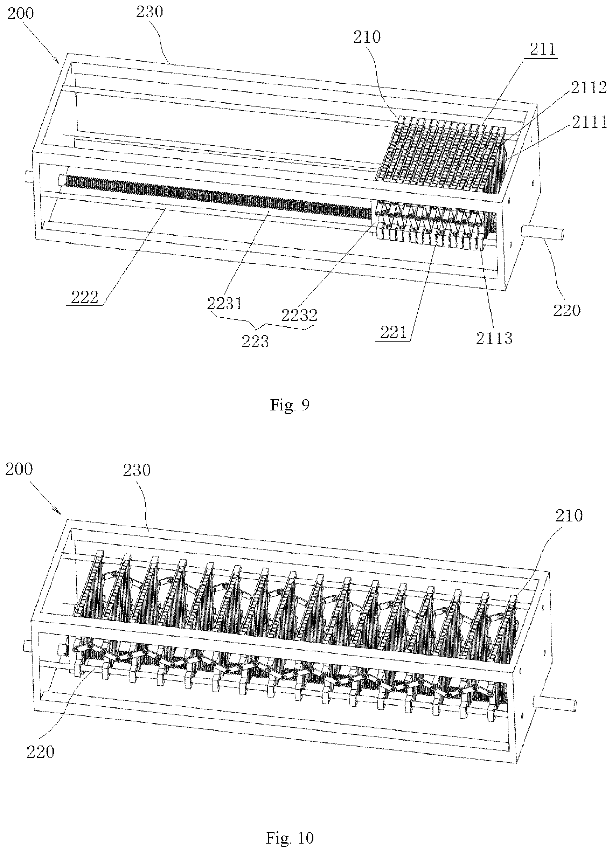

Figures 9 to 11 show a structural diagram of the detector system 200 in another embodiment of the present invention. The description of the present embodiment focuses on an example of the distance adjusting device 220 of the detector system 200. In terms of the structure, function, principle and effect of the detector 210 of the detector system 200 in the present invention and the aforesaid embodiment, reference may be made to the description of the detector system in the aforesaid embodiment. The detector 210 in the present embodiment and the detector 210 in the aforesaid embodiment differ in that in the present embodiment the number of detector layers 211 is 16, and a connecting structure 2113 for connecting the detector layers 211 of the distance adjusting device 220 is shown. The connecting structure 2113 is disposed on both sides of the scintillator detecting element layer of the detector layers 211 where the photoelectric conversion element is not disposed. As shown in Figure 9 to Figure 11, in the present embodiment, the silicon photomultipliers 2112 are disposed on both upper and lower sides of the detector layers 211, and the connecting structure 2113 is disposed on both front and rear sides. In Figure 9 to Figure 11, the left-right direction is the thickness direction of the detector layers 211 in the present embodiment.

As shown in Figure 9 to Figure 11, the distance adjusting device 220 of the detector system 200 in the present embodiment comprises an inter-layer connecting mechanism 221, a guiding mechanism 222, and a driving mechanism 223. The detector system 200 in the present embodiment further comprises a detector bracket 230, the detector layers of detector 210 and the distance adjusting device 220, arranged on the detector bracket 230.

The inter-layer connecting mechanism 221 is a control mechanism that keeps the inter-layer distances between each two detector layers 211 equal. The inter-layer connecting mechanism 221 is connected with each detector layer 211, and the inter-layer connecting mechanism 221 defines the same inter-layer distances between each two adjacent detector layers 211 when the distance adjusting device 220 adjusts the inter-layer distance.

As shown in Figures 9-11, the inter-layer connecting mechanism 221 in the present embodiment comprises a rod telescopic structure formed by a plurality of hinged connecting rods, and each detector layer 211 is hinged with the rod telescopic structure. The rod telescopic structure includes a plurality of connecting rods which are hinged sequentially from end to end. Among the connecting rods: two outermost (right and left) connecting rods of the rod telescopic structure are short connecting rods which are smaller in length. Both ends of the short connecting rod are hinged to an adjacent connecting rod and the middle of the outermost detector layer 211 respectively. The connecting rods between the two short connecting rods are long connecting rods which are larger in length. A plurality of long connecting rods are arranged corresponding to the plurality of detector layers 211 provided between the two outermost detector layers 211 one by one and sequentially connected end to end. The middle of each long connecting rod is hinged with the middle of the corresponding detector layer 211. As shown in Figures 9-11, each connecting rod of the rod telescopic structure are hinged to the connecting structure 2113 of each corresponding detector layer 211.

The function of defining the same inter-layer distances between each two adjacent detector layers 211 is realized by relating the movement and displacement of each detector layer 211 by means of the inter-layer connecting mechanism 221 which connects all detector layers 211.

In order to ensure the accuracy after adjusting the inter-layer distance of the detector layers 211, in the present embodiment, a rod telescopic structure is symmetrically arranged on both sides of the detector layers 211.

The guiding mechanism 222 guides the movement of each detector layer 211. The guiding mechanism 222 in the present embodiment, as shown in Figures 9-11, comprises a guiding rod, and each detector layer 211 comprises guiding holes matching the guiding rod. The guiding holes are disposed on the connecting structure 2113 of each detector layer 211. To provide a better support for each detector layer 211 and a better guidance for all the detector layers 211, guiding rods are arranged at each of the four corners of the detector 210 in the present embodiment. The four guiding rods are parallel to each other and cooperate with the inter-layer connecting mechanism 221, which allows for an accurate adjustment of the position of each detector layer 211.

The driving mechanism 223 may be drivingly connected with at least one of detector layers 211 in the plurality of detector layers 211. As shown in Figures 9 to 11, in the present embodiment, the rightmost detector layer 211 remains fixed, and the driving mechanism 223 is connected with the leftmost detector layer 211 of the plurality of detector layers 211 and drives all detector layers 211 except the rightmost detector layer 211 to move relative to the rightmost detector layer 211 for the purpose of adjusting the inter-layer distance between adjacent detector layers 211. Specifically, the driving mechanism 223 comprises a screw rod and a nut which is matched with the screw rod and is fixedly connected with one of the detector layers 211.

The outer contour of the nut and the position of the threaded hole relative to the outer contour of the nut are not limited in the description of the present invention as long as there is one threaded hole that cooperates with the screw rod to adjust the relative displacement of each detector layer 211. For example, the shape of the nut may be hexagonal, circular, square or irregular. As shown in Figures 9 to 11, the nut in the present embodiment has a square shape. The square nut is fixed on the left side of the leftmost detector layer 211, and the threaded hole is located at the lower part of the outer contour of the square nut and below the detector 210.

As shown in Figures 9 to 11, in the present embodiment, the detector bracket 230 has a rectangular frame structure, each guiding rod of the guiding mechanism 222 and the screw rod of the driving mechanism 223 are disposed on the detector bracket 230, and each detector layer 211 is disposed on the four guiding rods though the cooperation between the guiding holes and the guiding rods.

The detector bracket 230, the distance adjusting device 220 and the connecting structure of the detector layers may be made of a low Z material for the sake of preventing the detector bracket 230, the distance adjusting device 220 and the connecting structure of the detector layers from affecting the detection radioactive source 100 of the detector 210. Low Z materials have limited effects on high-energy rays and will not affect the detection of radioactive sources by the detector.

Embodiments of the present invention also provides a radiation imaging device comprising a detector system 200 involved in the present embodiment. The radiation imaging device has the same advantages as the detector system 200 disclosed in embodiments of the present invention.

The radiation imaging device in embodiments of the present invention utilizes a position sensitive detector and the Compton imaging principle and is applicable in the fields of nuclear radiation detection, radiation imaging, radionuclide monitoring and nuclear technology application.

Finally, it is noted that the above embodiments are only used to explain the technical solution of the present invention and shall not be construed as limitation; Although the present invention is described in detail with reference to preferred embodiments, those of ordinary skill in the art should understand that the specific embodiment of the present invention may still be modified or some technical features may be replaced by equivalent; without breaking away from the technical solution of the present invention, the scope of which is solely defined by the appended claims.

## Claims

1. A detector system (200), comprising:

   a detector (210), comprising a plurality of detector layers (211) that are overlapped, wherein said plurality of detector layers (211) each comprise a detector element layer, and at least one of said plurality of detector layers (211) is movable along the thickness direction of the detector layers (211); and
   a distance adjusting device (220) which is drivingly connected with the at least one of the detector layers (211), so as to adjust the inter-layer distance between adjacent detector layers (211) of the detector (210) by moving the at least one of the detector layers (211) along the thickness of the detector layers (211), wherein
   the distance adjusting device (220) comprises an inter-layer connecting mechanism (221) connected with each detector layer (211), and the inter-layer connecting mechanism (221) defines the same inter-layer distances between each two adjacent detector layers (211) when the distance adjusting device (220) adjusts the inter-layer distance, **characterized in that**:

the inter-layer connecting mechanism (221) comprises a rod telescopic structure formed by a plurality of hinged connecting rods, and each detector layer (211) is hinged with the rod telescopic structure.

2. The detector system (200) according to claim 1, wherein the detector element layer comprises a scintillator detecting element layer, and the detector layer (211) comprises a photoelectric conversion element connected with the scintillator detecting element layer and an integrated circuit chip connected with the photoelectric conversion element.

3. The detector system (200) according to claim 1 or 2, wherein the detector (210) comprises three or more than three detector layers (211).

4. The detector system (200) according to any one of claims 1 to 3, wherein the detector element layer comprises a scintillator detecting element layer, and the scintillator detecting element layer comprises a plurality of scintillator bars (2111) arranged closely side by side in a direction perpendicular to the thickness of the detector layers (211).

5. The detector system (200) according to claim 4, wherein sides other than the both ends in the length direction of the scintillator bars (2111) are provided with reflective layers.

6. The detector system (200) according to claim 4 or 5, wherein sides other than the both ends in the length direction of the scintillator bars (2111) are provided with light shield layers.

7. The detector system (200) according to any one of claims 4 to 6, wherein the detector layer (211) comprises silicon photomultipliers (2112), and both ends of each scintillator bar (2111) are respectively provided with one said silicon photomultiplier (2112).

8. The detector system (200) according to claim 7, wherein the detector layer (211) further comprises an integrated circuit chip connected with the silicon photomultipliers (2112) of the detector layer (211) in which the integrated circuit chip is located.

9. The detector system (200) according to any one of claims 1 to 8, wherein the detector system (200) comprises a power supply device and a data acquisition device which are connected with the detector (210).

10. The detector system (200) according to any one of claims 1 to 9, wherein the distance adjusting device (220) comprises a guiding mechanism (222) for guiding the movement of the at least one of the detector layers (211).

11. The detector system (200) according to any one of claims 1 to 10, wherein the distance adjusting device (220) further comprises a driving mechanism (223) which is drivingly connected with at least one detector layer (211) of the plurality of detector layers (211) to move said at least one detector layer (211) along the thickness direction of the detector layers (211) to adjust the inter-layer distance.

12. The detector system (200) according to any one of claims 1 to 11, wherein the detector system (200) comprises a detector bracket (230), and the plurality of detector layers (211) and the distance adjusting device (220) are arranged on the detector bracket (230).

13. A radiation imaging device comprising the detector system (200) according to any one of claims 1 to 12.

**Patentansprüche**

1. Detektorsystem (200), das Folgendes umfasst:

   einen Detektor (210), der mehrere Detektorschichten (211) umfasst, die überlappen, wobei die mehreren Detektorschichten (211) jeweils eine Detektorelementschicht umfassen und mindestens eine der mehreren Detektorschichten (211) in Dickenrichtung der Detektorschichten (211) beweglich ist; und
   eine Abstandseinstellvorrichtung (220), die mit der mindestens einen der Detektorschichten (211) antriebstechnisch verbunden ist, um den Zwischenschichtabstand zwischen benachbarten Detektorschichten (211) des Detektors (210) einzustellen, indem die mindestens eine der Detektorschichten (211) in Dickenrichtung der Detektorschichten (211) bewegt wird, wobei
   die Abstandseinstellvorrichtung (220) einen Zwischenschicht-Verbindungsmechanismus (221) umfasst, der mit jeder Detektorschicht (211) verbunden ist, und der Zwischenschicht-Verbindungsmechanismus (221) dieselben Zwischenschichtabstände zwischen jeweils zwei benachbarten Detektorschichten (211) definiert, wenn die Abstandseinstellvorrichtung (220) den Zwischenschichtabstand einstellt, **dadurch gekennzeichnet, dass**: der Zwischenschicht-Verbindungsmechanismus (221) eine Teleskopstangenstruktur umfasst, die durch mehrere gelenkig verbundene Verbindungsstangen gebildet ist, und jede Detektorschicht (211) mit der Teleskopstangenstruktur gelenkig verbunden ist.

2. Detektorsystem (200) nach Anspruch 1, wobei die Detektorelementschicht eine Szintillationszähler-Detektionselementschicht umfasst und die Detektorschicht (211) ein photoelektrisches Umsetzungselement, das mit der Szintillationszähler-Detektionselementschicht verbunden ist, und einen integrierten Schaltungschip, der mit dem photoelektrischen Umsetzungselement verbunden ist, umfasst.

3. Detektorsystem (200) nach Anspruch 1 oder 2, wobei der Detektor (210) drei oder mehr als drei Detektorschichten (211) umfasst.

4. Detektorsystem (200) nach einem der Ansprüche 1 bis 3, wobei die Detektorelementschicht eine Szintillationszähler-Detektionselementschicht umfasst und die Szintillationszähler-Detektionselementschicht mehrere Szintillatorstäbe (2111) umfasst, die in einer Richtung senkrecht zur Dicke der Detektorschichten (211) eng nebeneinander angeordnet sind.

5. Detektorsystem (200) nach Anspruch 4, wobei die Seiten, die von den beiden Enden verschieden sind, in Längsrichtung der Szintillatorstäbe (2111) mit Reflexionsschichten versehen sind.

6. Detektorsystem (200) nach Anspruch 4 oder 5, wobei die Seiten, die von den beiden Enden verschieden sind, in Längsrichtung der Szintillatorstäbe (2111) mit Lichtabschirmungsschichten versehen sind.

7. Detektorsystem (200) nach einem der Ansprüche 4 bis 6, wobei die Detektorschicht (211) Silizium-Photoelektronenvervielfacher (2112) umfasst und beide Enden jedes Szintillatorstabes (2111) jeweils mit einem der Silizium-Photoelektronenvervielfacher (2112) versehen sind.

8. Detektorsystem (200) nach Anspruch 7, wobei die Detektorschicht (211) ferner einen integrierten Schaltungschip umfasst, der mit den Silizium-Photoelektronenvervielfachern (2112) der Detektorschicht (211), in der der integrierte Schaltungschip angeordnet ist, verbunden ist.

9. Detektorsystem (200) nach einem der Ansprüche 1 bis 8, wobei das Detektorsystem (200) eine Stromversorgungsvorrichtung und eine Datenerfassungsvorrichtung umfasst, die mit dem Detektor (210) verbunden sind.

10. Detektorsystem (200) nach einem der Ansprüche 1 bis 9, wobei die Abstandseinstellvorrichtung (220) einen Führungsmechanismus (222) zum Führen der Bewegung der mindestens einen der Detektorschichten (211) umfasst.

11. Detektorsystem (200) nach einem der Ansprüche 1 bis 10, wobei die Abstandseinstellvorrichtung (220) ferner einen Antriebsmechanismus (223) umfasst, der mit mindestens einer Detektorschicht (211) der mehreren Detektorschichten (211) antriebstechnisch verbunden ist, um die mindestens eine Detektorschicht (211) in Dickenrichtung der Detektorschichten (211) zu bewegen, um den Zwischenschichtabstand einzustellen.

12. Detektorsystem (200) nach einem der Ansprüche 1 bis 11, wobei das Detektorsystem (200) eine Detektorkonsole (230) umfasst und die mehreren Detektorschichten (211) und die Abstandseinstellvorrichtung (220) auf der Detektorkonsole (230) angeordnet sind.

13. Strahlungsbildgebungsvorrichtung, die das Detektorsystem (200) nach einem der Ansprüche 1 bis 12 umfasst.

**Revendications**

1. Système de détecteur (200), comprenant :

un détecteur (210), comprenant une pluralité de couches de détecteur (211) qui sont superposées, dans lequel ladite pluralité de couches de détecteur comprennent chacune une couche d'élément de détecteur, et au moins l'une de ladite pluralité de couches de détecteur (211) est mobile le long de la direction d'épaisseur des couches de détecteur (211) ; et

un dispositif de réglage de distance (220) qui est relié en entraînement à l'au moins une des couches de détecteur (211), de façon à régler la distance intercouche entre des couches de détecteur (211) adjacentes du détecteur (210) par le déplacement de l'au moins une des couches de détecteur (211) le long de l'épaisseur des couches de détecteur (211), dans lequel

le dispositif de réglage de distance (220) comprend un mécanisme de liaison intercouche (221) relié à chaque couche de détecteur (211), et le mécanisme de liaison intercouche (221) définit les mêmes distances intercouches entre chaque deux couches de détecteur (211) adjacentes lorsque le dispositif de réglage de distance (220) règle la distance intercouche, **caractérisé en ce que** :

le mécanisme de liaison intercouche (221) comprend une structure à tige télescopique formée par une pluralité de biellettes articulées, et chaque couche de détecteur (211) est articulée avec la structure à tige télescopique.

2. Système de détecteur (200) selon la revendication 1, dans lequel la couche d'élément de détecteur comprend une couche d'élément de détection de scintillateur, et la couche de détecteur (211) comprend un élément de conversion photoélectrique connecté à la couche d'élément de détection de scintillateur et une puce de circuit intégré connectée à l'élément de conversion photoélectrique.

3. Système de détecteur (200) selon la revendication 1 ou 2, dans lequel le détecteur (210) comprend trois ou plus de trois couches de détecteur (211).

4. Système de détecteur (200) selon l'une quelconque des revendications 1 à 3, dans lequel la couche d'élément de détecteur comprend une couche d'élément de détection de scintillateur, et la couche d'élément de détection de scintillateur comprend une pluralité de barres de scintillateur (2111) agencées étroitement côte à côte dans une direction perpendiculaire à l'épaisseur des couches de détecteur (211).

5. Système de détecteur (200) selon la revendication 4, dans lequel des côtés autres que les deux extrémités dans la direction de longueur des barres de scintillateur (2111) sont munis de couches réfléchissantes.

6. Système de détecteur (200) selon la revendication 4 ou 5, dans lequel des côtés autres que les deux extrémités dans la direction de longueur des barres de scintillateur (2111) sont munis de couches de masquage de lumière.

7. Système de détecteur (200) selon l'une quelconque des revendications 4 à 6, dans lequel la couche de détecteur (211) comprend des photomultiplicateurs au silicium (2112), et les deux extrémités de chaque barre de scintillateur (2111) sont respectivement munies d'un dit photomultiplicateur au silicium (2112).

8. Système de détecteur (200) selon la revendication 7, dans lequel la couche de détecteur (211) comprend en outre une puce de circuit intégré connectée aux photomultiplicateurs au silicium (2112) de la couche de détecteur (211) dans laquelle la puce de circuit intégré est située.

9. Système de détecteur (200) selon l'une quelconque des revendications 1 à 8, dans lequel le système de détecteur (200) comprend un dispositif d'alimentation en énergie et un dispositif d'acquisition de données qui sont connectés au détecteur (210).

10. Système de détecteur (200) selon l'une quelconque des revendications 1 à 9, dans lequel le dispositif de réglage de distance (220) comprend un mécanisme de guidage (222) pour le guidage du mouvement de l'au moins une des couches de détecteur (211).

11. Système de détecteur (200) selon l'une quelconque des revendications 1 à 10, dans lequel le dispositif de réglage de distance (220) comprend en outre un mécanisme d'entraînement (223) qui est relié en entraînement à au moins une couche de détecteur (211) de la pluralité de couches de détecteur (211) pour déplacer ladite au moins une couche de détecteur (211) le long de la direction d'épaisseur des couches de détecteur (211) pour régler la distance intercouche.

12. Système de détecteur (200) selon l'une quelconque des revendications 1 à 11, dans lequel le système de détecteur (200) comprend un support de détecteur (230), et la pluralité de couches de détecteur (211) et le dispositif de réglage de distance (220) sont agencés sur le support de détecteur (230).

**13.** Dispositif d'imagerie par rayonnement comprenant le système de détecteur (200) selon l'une quelconque des revendications 1 à 12.

Fig. 1

Fig. 2

Fig. 3

EP 3 674 752 B1

Fig. 4

Fig. 5

15

Fig. 6

Fig. 7

Fig. 8

Fig. 9

Fig. 10

200

210

220

230

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008232971 A
- EP 3282288 A1
- US 20160135764 A1
- WO 2013063133 A1